(19) Europäisches Patentamt / European Patent Office / Office européen des brevets

(11) **EP 3 287 811 B1**

(12) **EUROPEAN PATENT SPECIFICATION**

(45) Date of publication and mention of the grant of the patent:
**12.06.2024 Bulletin 2024/24**

(21) Application number: **15889713.2**

(22) Date of filing: **13.10.2015**

(51) International Patent Classification (IPC):
**G01S 19/40** (2010.01)   **G01S 19/42** (2010.01)

(52) Cooperative Patent Classification (CPC):
**G01S 19/40; G01S 19/42**

(86) International application number:
**PCT/CN2015/091867**

(87) International publication number:
**WO 2016/169227 (27.10.2016 Gazette 2016/43)**

(54) **METHOD, DEVICE AND COMPUTER-READABLE STORAGE MEDIUM FOR GNSS POINT POSITIONING**

VERFAHREN, VORRICHTUNG UND COMPUTERLESBARES SPEICHERMEDIUM FÜR GNSS-PUNKTPOSITIONIERUNG

PROCÉDÉ, DISPOSITIF ET SUPPORT DE STOCKAGE LISIBLE PAR ORDINATEUR DE POSITIONNEMENT DE POINTS GNSS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2015 CN 201510199753**

(43) Date of publication of application:
**28.02.2018 Bulletin 2018/09**

(73) Proprietor: **Unicore Communications, Inc.**
**Haidian, Beijing 100094 (CN)**

(72) Inventors:
  • **CHEN, Kongzhe**
    **Beijing 100094 (CN)**
  • **GAO, Qingyu**
    **Beijing 100094 (CN)**
  • **HU, Gang**
    **Beijing 100094 (CN)**
  • **LI, Tao**
    **Beijing 100094 (CN)**
  • **ZHANG, Sijing**
    **Beijing 100094 (CN)**

(74) Representative: **D'Halleweyn, Nele Veerle Trees Gertrudis**
**Arnold & Siedsma**
**Bezuidenhoutseweg 57**
**2594 AC The Hague (NL)**

(56) References cited:
| EP-A2- 1 752 785 | WO-A2-00/48014 |
| CN-A- 101 403 790 | CN-A- 102 954 794 |
| CN-A- 103 477 243 | CN-A- 103 529 459 |
| CN-A- 104 777 498 | DE-A1-102008 026 746 |
| JP-A- 2005 221 374 | US-B1- 8 996 311 |

## Description

Technical Field

The disclosure relates to the satellite navigation field, more particularly, to a method, device and computer-readable storage medium for global navigation satellite system (GNSS) point positioning.

Background of the Related Art

Today the Global Navigation Satellite System (GNSS) consists of the Global Position System (GPS) of the USA, the Glonas satellite navigation system (GLONASS) of Russia, the Beidou Navigation System (BeiDou) of China and the Galileo satellite navigation system of EU. The GPS and GLONASS have been constructed completely and available for global positioning services. The BeiDou system of China has had 16 satellites working in orbit, including five Medium Earth Orbit (MEO) satellites, five Inclined Geosynchronous Satellite Orbit (IGSO) satellites and six Geostationary Earth Orbit (GEO) satellites, available for positioning services in the Asia-pacific region. EU's Galileo system has four satellites available. Governments of Japan and India are working on the R&D of their own regional satellite navigation positioning systems. Apparently, the GNSS industry is in a swift and violent development momentum and its industrialization is widespread. As a result, reliable navigation position algorithm and result become particularly important.

The traditional GNSS point positioning method is based on the least square estimation. Through an observation value of a single epoch, an increment relative to an initial coordinate is estimated by using the created observation model and stochastic model based on the principle of minimum weighted residual sum of squares, which then results in the final coordinates and other parameters to be estimated altogether, such as clock correction. Herein, the created observation model is shown in equation (1):

$$z_k = Hx_k + \varepsilon_k \tag{1}$$

The created stochastic model is shown in equation (2):

$$p(\varepsilon_k) \sim N(0, R) \tag{2}$$

Where, $z_k$ is the observation value at a moment k (substracting a known calculated value from the observation value in the GNSS point positioning). $x_k$ is the status value of the receiver at the moment k, $\varepsilon_k$ is the stochastic error of the observation model, $R$ is the observation error variance matrix, H is the design matrix, $N(0, R)$ refers to that the stochastic error complies with 0 expectation and $R$ variance.

Theoretically, the estimated coordinates are indeed the optimal values acquired on basis of the existing observation values. When the observation values are reliable, the position result acquired through the least square estimation remains basically stable in the meter level which suffices for most applications. However, in some complex situations, such as signal recapturing, building block-out, and going over bridge, the observation values are limited and in bad quality, and the position result will have a large deviation which sabotages seriously the usability of the position result.

Documents JP2005221374A and DE102008026746A1 disclose relevant prior art.

Summary of the Invention

The invention is set out in the appended set of claims. The disclosure describes a method and a device for GNSS point positioning with increased position precision and usability. It should be noted that embodiments of the invention are those whose scope is within that of the appended claims, and the implementations disclosed in this disclosure which do not fall under the scope of the appended claims are to be considered as examples for illustration.

A method for GNSS point positioning, includes inter alia, on a device:

creating a dynamic model of Kalman filtering based on a dynamic error variance matrix and a state transition matrix, and creating an observation model of Kalman filtering based on an observation error variance matrix and a design matrix;

acquring a first predicted status value and a variance matrix for the first predicated status value respectively based on the created dynamic model and created observation model of Kalman filtering;

calculating a gain matrix based on the acquired variance matrix for the first predicted status value, the design matrix and the observation error variance matrix;

calculating a second predicted status value based on the acquired first predicted status value, the design matrix, an observation value and the gain matrix; calculating a variance matrix for the second predicated status value based on the acquired variance matrix for the first predicated status value, the gain matrix and the design matrix; acquiring a smoothed velocity; calculating a next-moment status value and a variance matrix for the next-moment status value based on the acquired smoothed velocity, the second predicted status value and the variance matrix for the second predicted status value.

Optionally, the dynamic model is created by:

$$x_k = \Phi x_{k-1} + w_{k-1} \quad ;$$

The observation model is created by:

$$z_k = H x_k + \varepsilon_k$$

Where, $x_{k-1}$ and $x_k$ are status values of a receiver at moments (k-1) and k respectively, $\Phi$ is the state transition matrix, $H$ is the design matrix, $z_k$ is the observation value of the receiver at the moment k, $w_{k-1}$ and $\varepsilon_k$ are a stochastic error of the dynamic model and a stochastic error of the observation model, which comply with the following distributions, respectively:

$$p(w_{k-1}) \sim N(0, Q)$$

$$p(\varepsilon_k) \sim N(0, R)$$

$Q$ and $R$ are the dynamic error variance matrix and the observation error variance matrix respectively.
Optionally, the first predicated status value is acquired by:

$$\hat{x}_k^- = \Phi \hat{x}_{k-1} \quad ;$$

The variance matrix for the first predicated status value is acquired by:

$$P_k^- = \Phi P_{k-1} \Phi^T + Q \quad ;$$

Where, $Q$ is the dynamic error variance matrix, $\Phi$ is the state transition matrix, $\hat{x}_{k-1}$ is the status value of the receiver at the moment (k-1), $P_{k-1}$ is the variance matrix for the status value of the receiver at the moment (k-1).
Optionally, the gain matrix is calculated by:

$$K_k = P_k^- H^T (H P_k^- H^T + R)^{-1}$$

Where, $P_k^-$ is the variance matrix for the first predicted status value of the receiver at the moment k, $R$ is the observation error variance matrix, and $H$ is the design matrix.
Optionally, the second predicated status value is acquired by:

$$\hat{x}_k = \hat{x}_k^- + K_k (z_k - H \hat{x}_k^-)$$

The variance matrix for the second predicated status value is acquired by:

$$P_k = (I - K_k H) P_k^-$$ :

Where, I is a unit matrix, $\hat{x}_k^-$ is the first predicted status value of the receiver at the moment k, $P_k^-$ is the variance matrix for the first predicted status value of the receiver at the moment k, $K_k$ is the gain matrix.

The next-moment status value is calculated by:

$$\hat{x}_{k+1}^{''} = \hat{x}_k + \hat{v}_{ks} t$$

The variance matrix for the next-moment status value is calculated by:

$$P_{k+1}^{''} = \Phi P_k \Phi^T + P\hat{v}_{ks} t^2 + Q$$ .

Where, $\hat{v}_{ks}$ is the smoothed velocity of the receiver acquired at the moment k, t is a time interval from the moment k to the moment (k+1), $P\hat{v}_{ks}$ is a variance matrix for the smoothed velocity of the receiver acquired at the moment k, $\hat{x}_k$ is the second predicted status value of the receiver at the moment k.

Acquiring a smoothed velocity includes: acquiring a velocity at a current moment and velocities at two moments before the current moment; assigning a weight value to each acquired velocity, wherein a sum of the assigned weight values is equal to 1; calculating the smoothed velocity based on each acquired velocity and each assigned weight value.

A device for GNSS point positioning, includes: a modelling module, a first acquisition module, a first calculatation module, a second acquisition module and a second calculatation module.

The modelling module is configured to create a dynamic model of Kalman filtering based on a dynamic error variance matrix and a state transition matrix, and create an observation model of Kalman filtering based on an observation error variance matrix and a design matrix.

The first acquisition module is configured to acquire a first predicted status value and a variance matrix for the first predicated status value based on the created dynamic model and the created observation model of Kalman filtering.

The first calculation module is configured to calculate a gain matrix based on the acquired variance matrix for the first predicted status value, the design matrix and the observation error variance matrix.

The second acquisition module is configured to calculate a second predicted status value based on the acquired first predicted status, the design matrix, an observation value and the gain matrix; and calculate a variance matrix for the second predicated status value based on the acquired variance matrix for the first predicated status value, the gain matrix and the design matrix.

The second calculation module is configured to acquire a smoothed velocity; calculate a next-moment status value and a variance matrix for the next-moment status value based on the acquired smoothed velocity, the second predicted status value and the variance matrix for the second predicted status value.

The second calculatation module is, inter alia, further configured to acquire a velocity at a current moment and velocities at two moments before the current moment; assign a weight value to each acquired velocity, wherein a sum of the assigned weight values is equal to 1; calculate the smoothed velocity based on each acquired velocity and each assigned weight value.

A computer-readable storage medium, storing computer-executable instructions, which, when being executed, implement any of the above methods.

The scheme in the present disclosure includes: creating a dynamic model of Kalman filtering based on a dynamic error variance matrix and a state transition matrix, and creating an observation model of Kalman filtering based on an observation error variance matrix and a design matrix; acquring a first predicted status value and a variance matrix for the first predicated status value respectively based on the created dynamic model and created observation model of Kalman filtering; calculating a gain matrix based on the acquired variance matrix for the first predicted status value, the design matrix and the observation error variance matrix; calculating a second predicted status value based on the acquired first predicted status value, the design matrix, an observation value and the gain matrix; calculating a variance matrix for the second predicated status value based on the acquired variance matrix for the first predicated status value, the gain matrix and the design matrix; acquiring a smoothed velocity; calculating a next-moment status value and a variance matrix for the next-moment status value based on the acquired smoothed velocity, the second predicted status value and the variance matrix for the second predicted status value. With the scheme in the present disclosure, the precision and usability of a positioning result are increased.

Brief Description of Drawings

Fig. 1 is a flowchart for the method for GNSS point positioning based on Kalman filtering according to an embodiment of the invention.
Fig. 2 is a structure diagram for the device for GNSS point positioning based on Kalman filtering according to an embodiment of the invention.

Embodiments of the Invention

The embodiments of the present invention are described in detail in the following in conjunction with the figures. Note that, in the present disclosure, embodiments and features included therein can be combined in any means without conflict.

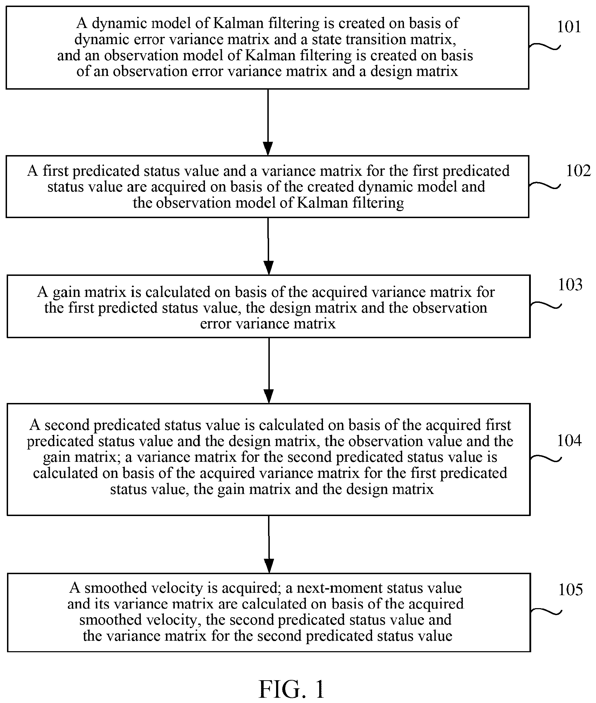

Fig. 1 is a simplified flowchart for the method for GNSS point positioning based on Kalman filtering according to an embodiment of the invention, including steps 101-105.

In Step 101, a dynamic model of Kalman filtering is created on basis of a dynamic error variance matrix and a state transition matrix, and an observation model of Kalman filtering is created on basis of an observation error variance matrix and a design matrix.

The dynamic model and the observation model are created by using equations (1.1) and (1.2) respectively:

$$x_k = \Phi x_{k-1} + w_{k-1} \qquad (1.1)$$

$$z_k = H x_k + \varepsilon_k \qquad (1.2)$$

where, $x_{k-1}$ and $x_k$ are status values of a receiver at moments (k-1) and k respectively, $\Phi$ is a state transition matrix, H is a design matrix, $z_k$ is an observation value of the receiver at the moment k, $w_{k-1}$ and $\varepsilon_k$ are a stochastic error of the dynamic model and a stochastic error of the observation model respectively, which comply with the following distributions respectively:

$$p(w_{k-1}) \sim N(0, Q)$$

$$p(\varepsilon_k) \sim N(0, R)$$

$Q$ and $R$ are the dynamic error variance matrix and the observation error variance matrix.

Note that the $\Phi$ is acquired as per a real-time dynamic condition of the receiver, while $H$ is acquired by linearizing the geometrical distance from a satellite to the receiver when an initial value of the receiver position $x$ is given. Once the initial value of the receiver position $x$ is given, $x_{k-1}$ and $x_k$ can be deduced with equation (1.1). How to acquire and calculate $\Phi$ and $H$ and to calculate $Q$ and $R$ are the commonly-used means known by one skilled in the art, and thus ignored here. $z_k$ is the observation value, and can be acquired by substrcting the known calculated value from the observation value in the GNSS point positioning. Herein, the observation value in GNSS can be acquired from the receiver, and the known calculated value is the geometrical distance from the satellite to the receiver acquired by using the initial value of the receiver position $x$.

In Step 102, a first predicated status value and a variance matrix for the first predicated status value are acquired respectively on basis of the created dynamic model and created observation model of Kalman filtering.

The first predicated status value and the variance matrix for the first predicated status value are acquired by using equations (1.3) and (1.4) respectively:

$$\hat{x}_k^- = \Phi \hat{x}_{k-1} \qquad (1.3)$$

$$P_k^- = \Phi P_{k-1} \Phi^T + Q \tag{1.4}$$

Where, $Q$ is the dynamic error variance matrix, $\Phi$ is the state transition matrix, $\hat{x}_{k-1}$ is the status value of the receiver at the moment (k-1), $P_{k-1}$ is the variance matrix for the status value of the receiver at the moment (k-1).

In Step 103, a gain matrix is calculated on basis of the acquired variance matrix for the first predicted status value, the design matrix and the observation error variance matrix.

Where, the gain matrix is calculated by using equation (1.5):

$$K_k = P_k^- H^T (\mathrm{H} \, P_k^- H^T + R)^{-1} \tag{1.5}$$

Where, $P_k^-$ is the variance matrix for the first predicated status value of the receiver at the moment k, $R$ is the observation error variance matrix, $H$ is the design matrix.

In Step 104, a second predicated status value is calculated on basis of the acquired first predicated status value and the design matrix, the observation value and the gain matrix; and a variance matrix for the second predicated status value is calculated on basis of the acquired variance matrix for the first predicated status value, the gain matrix and the design matrix.

Where, the second predicated status value and the variance matrix for the second predicated status value are acquired by using equations (1.6) and (1.7) respectively:

$$\hat{x}_k = \hat{x}_k^- + K_k (z_k - H\hat{x}_k^-) \tag{1.6}$$

$$P_k = (I - K_k H) P_k^- \tag{1.7}$$

Where, I is a unit matrix, $\hat{x}_k^-$ is the first predicated status value of the receiver at the moment k, $P_k^-$ is the variance matrix for the first predicated status value of the receiver at the moment k, $K_k$ is the gain matrix.

In Step 105, a smoothed velocity is acquired; and a next-moment status value and its variance matrix are calculated on basis of the acquired smoothed velocity, the second predicated status value and the variance matrix for the second predicated status value.

Where, the next-moment status value and its variance matrix are calculated by using equations (1.8) and (1.9) respectively:

$$\hat{x}_{k+1}'' = \hat{x}_k + \hat{v}_{ks} t \tag{1.8}$$

$$P_{k+1}'' = \Phi P_k \Phi^T + P\hat{v}_{ks} t^2 + Q \tag{1.9}$$

Where, $\hat{v}_{ks}$ is the smoothed velocity of the receiver acquired at the moment k, t is a time interval from the moment k to the moment (k+1), $P\hat{v}_{ks}$ is a variance matrix for the smoothed velocity of the receiver acquired at the moment k, $\hat{x}_k$ is the second predicated status value of the receiver at the moment k.

Acquring the smoothed velocities in this step includes acquiring a velocity at a current moment and velocities at two moments before the current moment; assigning a weight value to each acquired velocity, wherein a sum of the assigned weight values is equal to 1; calculating the smoothed velocity based on each acquired velocity and assigned weight value.

Note that a weight value to be assigned to each of the velocities is determined as needed, for example, they all can be 1/3. In addition, one skilled in the art can also select velocities at several continuous moments according to actual practical applications to perform velocity smoothing.

For example, for the GNSS with an inertial navigation system (INS) integrated, the velocity can be given by the INS without influence from the observation environment. The Kalman filtering can realize reliable positioning service and can even be expanded to predict velocity by using the acceleration and then predict coordinates. While for the pure GNSS, the instantaneous velocity can generally be estimated by using the Doppler observation value or the difference of phase observations between epochs. In poor observation environment, the precision of velocity estimation becomes deteriorated, which leads to decreased precision of the predicted status value of the Kalman filtering. As a result, it is needed to smooth appropriately the estimated velocities in complex environment (which can be judged by the number of satellites or DOP value). The smoothing manner is shown in the following equations (2.0) and (2.1):

$$\hat{v}_{ks} = a\hat{v}_k + b\hat{v}_{k-1} + c\hat{v}_{k-2} \qquad (2.0)$$

$$P\hat{v}_{ks} = a^2 P\hat{v}_k + b^2 P\hat{v}_{k-1} + c^2 P\hat{v}_{k-2} \qquad (2.1)$$

Where, $\hat{v}_{ks}$ is the smoothed velocity, $\hat{v}_k$ is the velocity of the receiver at the moment k, $\hat{v}_{k-1}$ is the velocity of the receiver at the moment (k-1), $\hat{v}_{k-2}$ is the velocity of the receiver at the moment (k-2), a, b and c are the weights assigned to the velocities of the current epoch and two epochs before the current epoch, complying with a + b + c = 1. Since previous velocities have smaller impact on the current velocity, only velocities of the latest several epochs have great reference values, and the values of a, b and c can be set by a user such as a=b=c=1/3, or a=0, b=c=0.5, or a=1, b=c=0. The number of epochs can be selected by the user accoridng to one's own situation to perform velocity smoothing (not limited to the 3 epochs mentioned in this example).

According to the invention, however, it is also needed to consider the variation of velocity, i.e. acceleration. A pure GNSS cannot acquire the acceleration value but it can be calculated through the velocity variation of two continuous epochs. Unless the high-dynamic conditions (where generally the observation blocking is small), the velocity variations remain a limited range. For example, in a vehicle application, a velocity variation generally remains to be within a gravitational acceleration. Therefore it is possible to limit the velocity variation (taking vehicle navigation as an example):

$$\hat{v}_k - \hat{v}_{k-1} < g \qquad (2.2)$$

Where, g is the gravitational acceleration. When a velocity variation is within the range of g, it indicates the velocity estimation is relatively reliable and velocity smoothing is not needed, that is, the case of a=1, b=c=0. When the velocity variation is beyond the range of g, the current velocity estimation becomes unreliable, so it is needed to acquire the velocity of the current epoch by perform velocity smoothing with equations (2.0) and (2.1). Meanwhile, a velocity weight of the current moment should be set as 0, and weights of the previous two epochs should be adjusted as well, such as 0.5 for both, i.e. the case of a=0, b=c=0.5. In this way, the relatively-reliable acceleration combined with the created Kalman filtering model will increase the position precision and reliability under poor observation environments.

In embodiments of the present invention, by using the Kalman filtering (equations 1.1-1.7), a velocity is used to predict a position and variance of the next epoch (equations 1.8-1.9), then to update a positioning estimation result and its variance through a GNSS observation value, and thus relating a positioning result of each epoch through velocity, resulting in increased reliability and precision of positioning. In addition, due to the deviation of velocity estimation under a complex situation, in the method according to the embodiment of the present invention, smoothing is performed on velocities under the complex situation (equations 2.0-2.1), resulting in increased velocity reliability, which is then used in the position prediction to improve the positioning result.

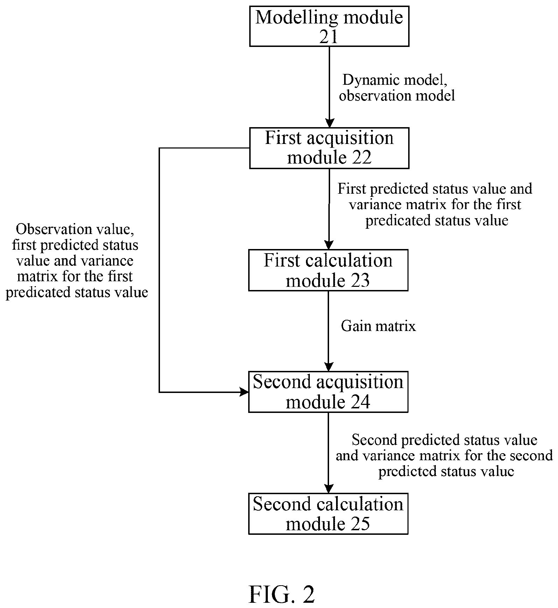

Fig. 2 is a structure diagram for the device for GNSS point positioning based on Kalman filtering according to an embodiment of the invention, as shown in Fig. 2, including a modelling module 21, a first acquisition module 22, a first calculation module 23, a second acquisition module 24 and a second calculation module 25.

The modelling module 21 is configured to create a dynamic model and an observation model of Kalman filtering on basis of the dynamic error variance matrix and a state transition matrix, and an observation error variance matrix and a design matrix, respectively.

Where, the modelling module 21 is configured to create the dynamic model and the observation module as per equations (1.1) and (1.2).

The first acquisition module 22 is configured to acquire the first predicated status value and the variance matrix for the first predicated status value based on the created dynamic model and created observation model of Kalman filtering, respectively.

Where, the first acquisition module 22 is configured to acquire the first predicated status value and the variance matrix for the first predicated status value as per equations (1.3) and (1.4) respectively.

The first calculation module 23 is configured to calculate the gain matrix on basis of the acquired variance matrix for the first predicted status value, the design matrix and the observation error variance matrix.

Where, the first calculation module 23 is configured to calculate the gain matrix through equation (1.5).

The second acquisition module 24 is configured to calculate the second predicated status value on basis of the acquired first predicated status value, the design matrix, an observation value and the gain matrix; and to calculate the variance matrix for the second predicated status value on basis of the acquired variance matrix for the first predicated status value, the gain matrix and the design matrix.

Where, the second acquisition module 24 is configured to acquire the second predicated status value and the variance matrix for the second predicated status value through equations (1.6) and (1.7).

The second calculation module 25 is configured to acquire a smoothed velocity, and calculate a next-moment status value and a variance matrix for the next-moment status value on basis of the acquired smoothed velocity, the second predicated status value and the variance matrix for the second predicted status value.

Where, the second calculatation module 25 is configured to calculate the next-moment status value and the variance matrix through equations (1.8) and (1.9) respectively.

In addition, the second calculatation module 25 acquires the smoothed velocity, including: acquiring a velocity at a current moment and velocities at two moments before the current moment; assigning a weight value to each acquired velocity, wherein a sum of the assigned weight values is equal to 1; calculating the smoothed velocity based on each acquired velocity and assigned weight value.

An ordinary skilled in the art can understand that all or part of the steps of the above embodiments can be implemented through a computer program workflow. The computer program can be stored in a computer-readable medium and executed on a corresponding hardware platform (such as system, device, equipment, component, etc.), and when being executed, includes one or a combination of the steps of the above embodiments.

Optionally, all or some of the above steps in the above embodiments can be implemented by an integrated circuit (IC). The steps can be made into separate IC modules, or several modules or steps therein can be made into one single IC.

The device/functional module/function unit in the above embodiments can be implemented in the universal computation devices. They can be concentrated on one single computation device or distributed on a network made up of multiple computation devices.

When the device/functional module/function unit in the above embodiments can be implemented in form of software function modules, sold or used as an independent product, and can be stored in a computer-readable storage medium. The computer-readable storage medium can be read-only storage, magnetic disk, optical disk, etc.

Industrial Applicability

In embodiments of the present invention, by using the Kalman filtering, a velocity is used to predict a position and variance of the next epoch, then to update a positioning estimation result and its variance through a GNSS observation value, and thus relating a positioning result of each epoch through velocity, resulting in increased reliability and precision of positioning. In addition, due to the deviation of velocity estimation under a complex situation, according to the embodiments of the present invention, smoothing is performed on velocities under the complex situation, resulting in increased velocity reliability, which is then used in the position prediction to improve the positioning result.

**Claims**

1. A method for Global Navigation Satellite System, GNSS, point positioning, comprising, on a device:

creating a dynamic model of Kalman filtering based on a dynamic error variance matrix and a state transition matrix, and creating an observation model of Kalman filtering based on an observation error variance matrix and a design matrix (101);
acquiring a first predicted status value and a variance matrix for the first predicated status value respectively based on the created dynamic model and created observation model of Kalman filtering (102);
calculating a gain matrix based on the acquired variance matrix for the first predicted status value, the design matrix and the observation error variance matrix (103);
calculating a second predicted status value based on the acquired first predicted status value, the design matrix, an observation value and the gain matrix; calculating a variance matrix for the second predicated status value based on the acquired variance matrix for the first predicated status value, the gain matrix and the design matrix (104); **characterized in that**:

acquiring a smoothed velocity; calculating a next-moment status value and a variance matrix for the next-moment status value based on the acquired smoothed velocity, the second predicted status value and the variance matrix for the second predicted status value (105); wherein said acquiring a smoothed velocity comprises:

acquiring a velocity at a current moment and velocities at two moments before the current moment; assigning a weight value to each acquired velocity, wherein a sum of the assigned weight values is equal to 1; calculating the smoothed velocity based on each acquired velocity and each assigned weight value; wherein the smoothed velocity is calculated by

$$\hat{v}_{ks} = a\hat{v}_k + b\hat{v}_{k-1} + c\hat{v}_{k-2}$$

$$P\hat{v}_{ks} = a^2 P\hat{v}_k + b^2 P\hat{v}_{k-1} + c^2 P\hat{v}_{k-2}$$

where, $\hat{v}_{ks}$ is the smoothed velocity, $\hat{v}_k$ is the velocity of a receiver at the moment k, $\hat{v}_{k-1}$ is the velocity of the receiver at the moment (k-1), $\hat{v}_{k-2}$ is the velocity of the receiver at the moment (k-2), *a*, *b* and *c* are the weights assigned to the velocities of the current epoch and two epochs before the current epoch; wherein, acceleration is considered when calculating the smoothed velocity, which is calculated through velocity variation of two continuous epochs; when a velocity variation is within the range of a gravitational acceleration, setting a=1, b=c=0; when the velocity variation is beyond the range of the gravitational acceleration, setting a=0, b=c=0.5; wherein, the next-moment status value and its variance matrix are calculated by:

$$\hat{x}^{''}_{k+1} = \hat{x}_k + \hat{v}_{ks}t$$

$$P^{''}_{k+1} = \Phi P_k \Phi^T + P\hat{v}_{ks}t^2 + Q$$

wherein $\hat{v}_{ks}$ is the smoothed velocity of the receiver acquired at the moment k, t is a time interval from the moment k to the moment (k+1), $\Phi$ is the state transition matrix, $P\hat{v}_{ks}$ is a variance matrix for the smoothed velocity of the receiver acquired at the moment k, $\hat{x}_k$ is the second predicated status value of the receiver at the moment k, Q is the dynamic error variance matrix and $P_k$ is the variance matrix for the second predicted status value of the receiver at the moment k.

2. The method of claim 1, wherein the dynamic model is created by:

$$x_k = \Phi x_{k-1} + w_{k-1} \quad .$$

the observation model is created by:

$$z_k = Hx_k + \varepsilon_k \quad .$$

where, $x_{k-1}$ and $x_k$ are status values of a receiver at a moment (k-1) and a moment k respectively, H is the design matrix, $z_k$ is the observation value of the receiver at the moment k, $w_{k-1}$ and $\varepsilon_k$ are a stochastic error of the dynamic model and a stochastic error of the observation model respectively, which comply with the following distributions respectively:

$$p(w_{k-1}) \sim N(0, Q)$$

$$p(\varepsilon_k) \sim N(0, R)$$

$Q$ and $R$ are the dynamic error variance matrix and the observation error variance matrix respectively.

3. The method of claim 1 or 2, wherein the first predicated status value is acquired by:

$$\hat{x}_k^- = \Phi \hat{x}_{k-1} ;$$

the variance matrix for the first predicated status value is acquired by:

$$P_k^- = \Phi P_{k-1} \Phi^T + Q .$$

where, $\hat{x}_{k-1}$ is the status value of the receiver at the moment (k-1), and $P_{k-1}$ is the variance matrix for the status value of the receiver at the moment (k-1).

4. The method of claim 3, wherein the gain matrix is calculated by:

$$K_k = P_k^- H^T (\mathrm{H} P_k^- H^T + R)^{-1}$$

where, $P_k^-$ is the variance matrix for the first predicted status value of the receiver at the moment k, $R$ is the observation error variance matrix, and $H$ is the design matrix.

5. The method of claim 4, wherein the second predicated status value is acquired by:

$$\hat{x}_k = \hat{x}_k^- + K_k (z_k - H \hat{x}_k^-) ;$$

the variance matrix for the second predicated status value is acquired by:

$$P_k = (I - K_k H) P_k^- .$$

where, I is a unit matrix, $\hat{x}_k^-$ is the first predicted status value of the receiver at the moment k, $P_k^-$ is the variance matrix for the first predicted status value of the receiver at the moment k, $K_k$ is the gain matrix.

6. A device for Global Navigation Satellite System, GNSS, point positioning, comprising:
a modelling module (21), a first acquisition module (22), a first calculation module (23), a second acquisition module (24) and a second calculation module (25), wherein:

the modelling module is configured to create a dynamic model of Kalman filtering based on a dynamic error variance matrix and a state transition matrix, and create an observation model of Kalman filtering based on an observation error variance matrix and a design matrix;
the first acquisition module is configured to acquire a first predicted status value and a variance matrix for the first predicated status value respectively based on the created dynamic model and created observation model of Kalman filtering;
the first calculation module is configured to calculate a gain matrix based on the acquired variance matrix for the first predicted status value, the design matrix and the observation error variance matrix;
the second acquisition module is configured to calculate a second predicted status value based on the acquired first predicted status, the design matrix, an observation value and the gain matrix; and calculate a variance matrix for the second predicated status value based on the acquired variance matrix for the first predicated status value, the gain matrix and the design matrix; **characterized in that**:
the second calculation module is configured to acquire a smoothed velocity; calculate a next-moment status value and a variance matrix for the next-moment status value based on the acquired smoothed velocity, the second predicted status value and the variance matrix for the second predicted status value; wherein the second calculation module is configured to:

acquire a velocity at a current moment and velocities at two moments before the current moment; assign a weight value to each acquired velocity, wherein a sum of the assigned weight values is equal to 1; calculate the smoothed velocity based on each acquired velocity and each assigned weight value; wherein the smoothed velocity is calculated by

$$\hat{v}_{ks} = a\hat{v}_k + b\hat{v}_{k-1} + c\hat{v}_{k-2}$$

$$P\hat{v}_{ks} = a^2 P\hat{v}_k + b^2 P\hat{v}_{k-1} + c^2 P\hat{v}_{k-2}$$

where, $\hat{v}_{ks}$ is the smoothed velocity, $\hat{v}_k$ is the velocity of a receiver at the moment k, $\hat{v}_{k-1}$ is the velocity of the receiver at the moment (k-1), $\hat{v}_{k-2}$ is the velocity of the receiver at the moment (k-2), $a$, $b$ and $c$ are the weights assigned to the velocities of the current epoch and two epochs before the current epoch; wherein, acceleration is considered when calculating the smoothed velocity, which is calculated through velocity variation of two continuous epochs; when a velocity variation is within the range of a gravitational acceleration, setting a=1, b=c=0; when the velocity variation is beyond the range of the gravitational acceleration, setting a=0, b=c=0.5; wherein, the next-moment status value and its variance matrix are calculated by:

$$\hat{x}_{k+1}^{"} = \hat{x}_k + \hat{v}_{ks}t$$

$$P_{k+1}^{"} = \Phi P_k \Phi^T + P\hat{v}_{ks}t^2 + Q$$

wherein $\hat{v}_{ks}$ is the smoothed velocity of the receiver acquired at the moment k, t is a time interval from the moment k to the moment (k+1), $\Phi$ is the state transition matrix, $P\hat{v}_{ks}$ is a variance matrix for the smoothed velocity of the receiver acquired at the moment k, $\hat{x}_k$ is the second predicated status value of the receiver at the moment k, Q is the dynamic error variance matrix and and $P_k$ is the variance matrix for the second predicted status value of the receiver at the moment k.

7. A computer-readable storage medium, storing computer-executable instructions, which, when being executed, implement the method according to any of claims 1-5.

**Patentansprüche**

1. Verfahren für "Global Navigation Satellite System"-, GNSS-, Punktpositionierung, umfassend, auf einer Vorrichtung:

Erstellen eines dynamischen Modells von Kalman-Filterung auf der Grundlage einer dynamischen Fehlervarianzmatrix und einer Zustandsübergangsmatrix, und Erstellen eines Beobachtungsmodells von Kalman-Filterung auf der Grundlage einer Beobachtungsfehlervarianzmatrix und einer Entwurfsmatrix (101);
Ermitteln eines ersten vorhergesagten Statuswertes und einer Varianzmatrix für den ersten vorhergesagten Statuswert auf der Grundlage des erzeugten dynamischen Modells bzw. des erzeugten Beobachtungsmodells von Kalman-Filterung (102);
Berechnen einer Verstärkungsmatrix auf der Grundlage der ermittelten Varianzmatrix für den ersten vorhergesagten Statuswert, der Entwurfsmatrix und der Beobachtungsfehlervarianzmatrix (103);
Berechnen eines zweiten vorhergesagten Statuswertes auf der Grundlage des ermittelten ersten vorhergesagten Statuswertes, der Entwurfsmatrix, eines Beobachtungswertes und der Verstärkungsmatrix; Berechnen einer Varianzmatrix für den zweiten vorhergesagten Statuswert auf der Grundlage der ermittelten Varianzmatrix für den ersten vorhergesagten Statuswert, der Verstärkungsmatrix und der Entwurfsmatrix (104); **gekennzeichnet durch**:
Ermitteln einer geglätteten Geschwindigkeit; Berechnen eines Statuswertes des nächsten Zeitpunkts und einer Varianzmatrix für den Statuswert des nächsten Zeitpunkts auf der Grundlage der ermittelten geglätteten Geschwindigkeit, des zweiten vorhergesagten Statuswertes und der Varianzmatrix für den zweiten vorhergesagten Statuswert (105); wobei das Ermitteln einer geglätteten Geschwindigkeit umfasst:

Ermitteln einer Geschwindigkeit zu einem aktuellen Zeitpunkt und von Geschwindigkeiten zu zwei Zeitpunkten vor dem aktuellen Zeitpunkt;
Zuweisen eines Gewichtungswertes zu jeder ermittelten Geschwindigkeit, wobei eine Summe der zugeordneten Gewichtungswerte gleich 1 ist;
Berechnen der geglätteten Geschwindigkeit auf der Grundlage jeder ermittelten Geschwindigkeit und jedes zugewiesenen Gewichtungswertes; wobei die geglättete Geschwindigkeit wie folgt berechnet wird:

$$\hat{v}_{ks} = a\hat{v}_k + b\hat{v}_{k-1} + c\hat{v}_{k-2}$$

$$P\hat{v}_{ks} = a^2 P\hat{v}_k + b^2 P\hat{v}_{k-1} + c^2 P\hat{v}_{k-2}$$

wobei $\hat{v}_{ks}$ die geglättete Geschwindigkeit ist, $\hat{v}_k$ die Geschwindigkeit eines Empfängers zum Zeitpunkt k ist, $\hat{v}_{k-1}$ die Geschwindigkeit des Empfängers zum Zeitpunkt (k-1) ist, $\hat{v}_{k-2}$ die Geschwindigkeit des Empfängers zum Zeitpunkt (k-2) ist, a, b und c die Gewichtungen sind, die den Geschwindigkeiten der aktuellen Epoche und zweier Epochen vor der aktuellen Epoche zugewiesen sind; wobei Beschleunigung beim Berechnen der geglätteten Geschwindigkeit berücksichtigt wird, die durch Geschwindigkeitsvariation zweier kontinuierlicher Epochen berechnet wird; wenn eine Geschwindigkeitsvariation innerhalb des Bereichs einer Gravitationsbeschleunigung liegt, a=1, b=c=0 gesetzt wird; wenn die Geschwindigkeitsvariation außerhalb des Bereichs der Gravitationsbeschleunigung liegt, a=0, b=c=0,5 gesetzt wird; wobei der Statuswert des nächsten Zeitpunkts und seine Varianzmatrix wie folgt berechnet werden:

$$\hat{x}_{k+1}^{''} = \hat{x}_k + \hat{v}_{ks}t$$

$$P_{k+1}^{''} = \Phi P_k \Phi^T + P\hat{v}_{ks}t^2 + Q$$

wobei $\hat{v}_{ks}$ die geglättete Geschwindigkeit des Empfängers ist, die zum Zeitpunkt k ermittelt wird, t ein Zeitintervall vom Zeitpunkt k bis zum Zeitpunkt (k+1) ist, $\Phi$ die Zustandsübergangsmatrix ist, $P\hat{v}_{ks}$ eine Varianzmatrix für die geglättete Geschwindigkeit des Empfängers ist, die zum Zeitpunkt k ermittelt wird, $\hat{x}_k$ der zweite vorhergesagte Statuswert des Empfängers zum Zeitpunkt k ist, Q die dynamische Fehlervarianzmatrix ist und $P_k$ die Varianzmatrix für den zweiten vorhergesagten Statuswert des Empfängers zum Zeitpunkt k ist.

2. Verfahren nach Anspruch 1, wobei das dynamische Modell wie folgt erzeugt wird:

$$x_k = \Phi x_{k-1} + w_{k-1}$$

das Beobachtungsmodell wie folgt erzeugt wird:

$$z_k = Hx_k + \varepsilon_k$$

Wobei $x_{k-1}$ und $x_k$ Statuswerte eines Empfängers zum Zeitpunkt (k-1) bzw. zum Zeitpunkt k sind, H die Entwurfsmatrix ist, $z_k$ der Beobachtungswert des Empfängers zum Zeitpunkt k ist, $w_{k-1}$ und $\varepsilon_k$ ein stochastischer Fehler des dynamischen Modells bzw. ein stochastischer Fehler des Beobachtungsmodells ist, die jeweils den folgenden Verteilungen entsprechen:

$$p(w_{k-1}) \sim N(0, Q)$$

$$p(\varepsilon_k) \sim N(0, R)$$

wobei $Q$ und $R$ die dynamische Fehlervarianzmatrix bzw. die Beobachtungsfehlervarianzmatrix ist.

3. Verfahren nach Anspruch 1 oder 2, wobei der erste vorhergesagte Statuswert wie folgt ermittelt wird:

$$\hat{x}_k^- = \Phi \hat{x}_{k-1}$$

die Varianzmatrix für den ersten vorhergesagten Statuswert wie folgt ermittelt wird:

$$P_k^- = \Phi P_{k-1} \Phi^T + Q$$

wobei $\hat{x}_{k-1}$ der Statuswert des Empfängers zum Zeitpunkt (k-1) ist und $P_{k-1}$ die Varianzmatrix für den Statuswert des Empfängers zum Zeitpunkt (k-1) ist.

4. Verfahren nach Anspruch 3, wobei die Verstärkungsmatrix wie folgt berechnet wird:

$$K_k = P_k^- H^T (\mathrm{H}\, P_k^- H^T + R)^{-1}$$

wobei $P_k^-$ die Varianzmatrix für den ersten vorhergesagten Statuswert des Empfängers zum Zeitpunkt k ist, $R$ die Beobachtungsfehlervarianzmatrix und $H$ die Entwurfsmatrix ist.

5. Verfahren nach Anspruch 4 oder 2, wobei der zweite vorhergesagte Statuswert wie folgt ermittelt wird:

$$\hat{x}_k = \hat{x}_k^- + K_k (z_k - H\hat{x}_k^-)$$

die Varianzmatrix für den zweiten vorhergesagten Statuswert wie folgt ermittelt wird:

$$P_k = (I - K_k H) P_k^-$$

wobei I eine Einheitsmatrix ist, $\hat{x}_k^-$ der erste vorhergesagte Statuswert des Empfängers zum Zeitpunkt k ist, $P_k^-$ die Varianzmatrix für den ersten vorhergesagten Statuswert des Empfängers zum Zeitpunkt k ist, $K_k$ die Verstärkungsmatrix ist.

6. Vorrichtung für "Global Navigation Satellite System"-, GNSS-, Punktpositionierung, umfassend:
   ein Modellierungsmodul (21), ein erstes Ermittlungsmodul (22), ein erstes Berechnungsmodul (23), ein zweites Ermittlungsmodul (24) und ein zweites Berechnungsmodul (25), wobei:

   das Modellierungsmodul dafür ausgelegt ist, ein dynamisches Modell von Kalman-Filterung auf der Grundlage einer dynamischen Fehlervarianzmatrix und einer Zustandsübergangsmatrix zu erstellen und ein Beobachtungsmodell von Kalman-Filterung auf der Grundlage einer Beobachtungsfehlervarianzmatrix und einer Entwurfsmatrix zu erstellen;
   das erste Ermittlungsmodul dafür ausgelegt ist, einen ersten vorhergesagten Statuswert und eine Varianzmatrix für den ersten vorhergesagten Statuswert auf der Grundlage des erzeugten dynamischen Modells bzw. des erzeugten Beobachtungsmodells von Kalman-Filterung zu ermitteln;
   das erste Berechnungsmodul dafür ausgelegt ist, eine Verstärkungsmatrix auf der Grundlage der ermittelten Varianzmatrix für den ersten vorhergesagten Statuswert, der Entwurfsmatrix und der Beobachtungsfehlervarianzmatrix zu berechnen;
   das zweite Ermittlungsmodul dafür ausgelegt ist, einen zweiten vorhergesagten Statuswert auf der Grundlage des ermittelten ersten vorhergesagten Statuswertes, der Entwurfsmatrix, eines Beobachtungswertes und der Verstärkungsmatrix zu berechnen; und eine Varianzmatrix für den zweiten vorhergesagten Statuswert auf der Grundlage der ermittelten Varianzmatrix für den ersten vorhergesagten Statuswert, der Verstärkungsmatrix und der Entwurfsmatrix zu berechnen;

**gekennzeichnet dadurch, dass**:

das zweite Berechnungsmodul dafür ausgelegt ist, eine geglättete Geschwindigkeit zu ermitteln; einen Statuswert des nächsten Zeitpunkts und eine Varianzmatrix für den Statuswert des nächsten Zeitpunkts auf der Grundlage der ermittelten geglätteten Geschwindigkeit, des zweiten vorhergesagten Statuswertes und der Varianzmatrix für den zweiten vorhergesagten Statuswert zu berechnen; wobei das zweite Berechnungsmodul für folgende Vorgänge ausgelegt ist:

Ermitteln einer Geschwindigkeit zu einem aktuellen Zeitpunkt und von Geschwindigkeiten zu zwei Zeitpunkten vor dem aktuellen Zeitpunkt;

Zuweisen eines Gewichtungswertes zu jeder ermittelten Geschwindigkeit, wobei eine Summe der zugeordneten Gewichtungswerte gleich 1 ist;

Berechnen der geglätteten Geschwindigkeit auf der Grundlage jeder ermittelten Geschwindigkeit und jedes zugewiesenen Gewichtungswertes; wobei die geglättete Geschwindigkeit wie folgt berechnet wird:

$$\hat{v}_{ks} = a\hat{v}_k + b\hat{v}_{k-1} + c\hat{v}_{k-2}$$

$$P\hat{v}_{ks} = a^2 P\hat{v}_k + b^2 P\hat{v}_{k-1} + c^2 P\hat{v}_{k-2}$$

wobei $\hat{v}_{ks}$ die geglättete Geschwindigkeit ist, $\hat{v}_k$ die Geschwindigkeit eines Empfängers zum Zeitpunkt k ist, $\hat{v}_{k-1}$ die Geschwindigkeit des Empfängers zum Zeitpunkt (k-1) ist, $\hat{v}_{k-2}$ die Geschwindigkeit des Empfängers zum Zeitpunkt (k-2) ist, a, b und c die Gewichtungen sind, die den Geschwindigkeiten der aktuellen Epoche und zweier Epochen vor der aktuellen Epoche zugewiesen sind; wobei Beschleunigung beim Berechnen der geglätteten Geschwindigkeit berücksichtigt wird, die durch Geschwindigkeitsvariation zweier kontinuierlicher Epochen berechnet wird; wenn eine Geschwindigkeitsvariation innerhalb des Bereichs einer Gravitationsbeschleunigung liegt, a=1, b=c=0 gesetzt wird; wenn eine Geschwindigkeitsvariation außerhalb des Bereichs der Gravitationsbeschleunigung liegt, a=0, b=c=0,5 gesetzt wird; wobei der Statuswert des nächsten Zeitpunkts und seine Varianzmatrix wie folgt berechnet werden:

$$\hat{x}''_{k+1} = \hat{x}_k + \hat{v}_{ks}t$$

$$P''_{k+1} = \Phi P_k \Phi^T + P\hat{v}_{ks}t^2 + Q$$

wobei $\hat{v}_{ks}$ die geglättete Geschwindigkeit des Empfängers ist, die zum Zeitpunkt k ermittelt wird, t ein Zeitintervall vom Zeitpunkt k bis zum Zeitpunkt (k+1) ist, $\Phi$ die Zustandsübergangsmatrix ist, $P\hat{v}_{ks}$ eine Varianzmatrix für die geglättete Geschwindigkeit des Empfängers ist, die zum Zeitpunkt k ermittelt wird, $\hat{x}_k$ der zweite vorhergesagte Statuswert des Empfängers zum Zeitpunkt k ist, $Q$ die dynamische Fehlervarianzmatrix ist und $P_k$ die Varianzmatrix für den zweiten vorhergesagten Statuswert des Empfängers zum Zeitpunkt k ist.

7. Computerlesbares Speichermedium, das computerausführbare Anweisungen speichert, die bei ihrer Ausführung das Verfahren nach einem der Ansprüche 1 bis 5 implementieren.

**Revendications**

1. Procédé pour le positionnement de points dans le système mondial de navigation par satellites, GNSS, comprenant, sur un dispositif :

la création d'un modèle dynamique de filtrage de Kalman sur la base d'une matrice de variance d'erreur dynamique et d'une matrice de transition d'état, et la création d'un modèle d'observation de filtrage de Kalman sur la base d'une matrice de variance d'erreur d'observation et d'une matrice de conception (101) ;

l'acquisition d'une première valeur d'état prédite et d'une matrice de variance pour la première valeur d'état prédite respectivement sur la base du modèle dynamique de filtrage de Kalman créé et du modèle d'observation de filtrage de Kalman créé (102) ;

le calcul d'une matrice de gain sur la base de la matrice de variance acquise pour la première valeur d'état prédite, de la matrice de conception et de la matrice de variance d'erreur d'observation (103) ;

le calcul d'une seconde valeur d'état prédite sur la base de la première valeur d'état prédite acquise, de la matrice de conception, d'une valeur d'observation et de la matrice de gain ; et le calcul d'une matrice de variance pour la seconde valeur d'état prédite sur la base de la matrice de variance acquise pour la première valeur d'état prédite, de la matrice de gain et de la matrice de conception (104) ;

**caractérisé par** :

l'acquisition d'une vitesse lissée ; le calcul d'une valeur d'état de moment suivant et d'une matrice de variance pour la valeur d'état de moment suivant sur la base de la vitesse lissée acquise, de la seconde valeur d'état prédite et de la matrice de variance pour la seconde valeur d'état prédite (105) ;

dans lequel ladite acquisition d'une vitesse lissée comprend :

l'acquisition d'une vitesse à un moment courant et de vitesses à deux moments avant le moment courant ;

l'attribution d'une valeur de poids à chaque vitesse acquise, dans lequel une somme des valeurs de poids attribuées est égale à 1 ; et

le calcul de la vitesse lissée sur la base de chaque vitesse acquise et de chaque valeur de poids attribuée ; dans lequel la vitesse lissée est calculée par :

$$\hat{v}_{ks} = a\hat{v}_k + b\hat{v}_{k-1} + c\hat{v}_{k-2}$$

$$P\hat{v}_{ks} = a^2 P\hat{v}_k + b^2 P\hat{v}_{k-1} + c^2 P\hat{v}_{k-2}$$

où $\hat{v}_{ks}$ est la vitesse lissée, $\hat{v}_k$ est la vitesse d'un récepteur au moment k, $\hat{v}_{k-1}$ est la vitesse du récepteur au moment (k-1), $\hat{v}_{k-2}$ est la vitesse du récepteur au moment (k-2), a, b et c sont les poids attribués aux vitesses de l'époque courante et de deux époques avant l'époque courante ; dans lequel l'accélération est considérée lors du calcul de la vitesse lissée, laquelle est calculée par l'intermédiaire d'une variation de vitesse de deux époques continues ; lorsqu'une variation de vitesse est à l'intérieur de la plage d'une accélération gravitationnelle, a = 1, b = c = 0 sont définis ; lorsque la variation de vitesse est au-delà de la plage de l'accélération gravitationnelle, a = 0, b = c = 0,5 sont définis ; dans lequel la valeur d'état de moment suivant et sa matrice de variance sont calculées par :

$$\hat{x}_{k+1}^* = \hat{x}_k + \hat{v}_{ks}\, t$$

$$P_{k+1}^* = \Phi P_k \Phi^T + P\hat{v}_{ks}\, t^2 + Q$$

où $\hat{v}_{ks}$ est la vitesse lissée du récepteur acquise au moment k, t est un intervalle temporel depuis le moment k jusqu'au moment (k+1), $\Phi$ est la matrice de transition d'état, $P\hat{v}_{ks}$ est une matrice de variance pour la vitesse lissée du récepteur acquise au moment k, $\hat{x}_k$ est la seconde valeur d'état prédite du récepteur au moment k, Q est la matrice de variance d'erreur dynamique et $P_k$ est la matrice de variance pour la seconde valeur d'état prédite du récepteur au moment k.

2. Procédé selon la revendication 1, dans lequel le modèle dynamique est créé par :

$$x_k = \Phi x_{k-1} + w_{k-1}\, ;$$

le modèle d'observation est créé par :

$$z_k = Hx_k + \varepsilon_k,$$

où $x_{k-1}$ et $x_k$ sont respectivement des valeurs d'état d'un récepteur à un moment (k-1) et à un moment k, $H$ est la matrice de conception, $z_k$ est la valeur d'observation du récepteur au moment k, $w_{k-1}$ et $\varepsilon_k$ sont respectivement une erreur stochastique du modèle dynamique et une erreur stochastique du modèle d'observation, lesquelles satisfont respectivement les distributions suivantes :

$$p(w_{k-1}) \sim N(0, Q)$$

$$p(\varepsilon_k) \sim N(0, R)$$

$Q$ et $R$ sont respectivement la matrice de variance d'erreur dynamique et la matrice de variance d'erreur d'observation.

3. Procédé selon la revendication 1 ou 2, dans lequel la première valeur d'état prédite est acquise par :

$$\hat{x}_k^- = \Phi \hat{x}_{k-1} \,;$$

la matrice de variance pour la première valeur d'état prédite est acquise par :

$$P_k^- = \Phi P_{k-1} \Phi^T + Q$$

où $\hat{x}_{k-1}$ est la valeur d'état du récepteur au moment (k-1) et $P_{k-1}$ est la matrice de variance pour la valeur d'état du récepteur au moment (k-1).

4. Procédé selon la revendication 3, dans lequel la matrice de gain est calculée par :

$$K_k = P_k^- H^T (H P_k^- H^T + R)^{-1}$$

où $P_k^-$ est la matrice de variance pour la première valeur d'état prédite du récepteur au moment k, $R$ est la matrice de variance d'erreur d'observation et $H$ est la matrice de conception.

5. Procédé selon la revendication 4, dans lequel la seconde valeur d'état prédite est acquise par :

$$\hat{x}_k = \hat{x}_k^- + K_z (z_k - H \hat{x}_k^-) \,;$$

la matrice de variance pour la seconde valeur d'état prédite est acquise par :

$$P_k = (I - K_k H) P_k^-$$

où $I$ est une matrice unitaire, $\hat{x}_k^-$ est la première valeur d'état prédite du récepteur au moment k, $P_k^-$ est la matrice de variance pour la première valeur d'état prédite du récepteur au moment k et $K_k$ est la matrice de gain.

6. Dispositif pour le positionnement de points dans le système mondial de navigation par satellites, GNSS, comprenant : un module de modélisation (21), un premier module d'acquisition (22), un premier module de calcul (23), un second module d'acquisition (24) et un second module de calcul (25), dans lequel :

le module de modélisation est configuré pour créer un modèle dynamique de filtrage de Kalman sur la base d'une matrice de variance d'erreur dynamique et d'une matrice de transition d'état et pour créer un modèle d'observation de filtrage de Kalman sur la base d'une matrice de variance d'erreur d'observation et d'une matrice de conception ;

le premier module d'acquisition est configuré pour acquérir une première valeur d'état prédite et une matrice de variance pour la première valeur d'état prédite respectivement sur la base du modèle dynamique de filtrage de Kalman créé et du modèle d'observation de filtrage de Kalman créé ;

le premier module de calcul est configuré pour calculer une matrice de gain sur la base de la matrice de variance acquise pour la première valeur d'état prédite, de la matrice de conception et de la matrice de variance d'erreur d'observation ;

le second module d'acquisition est configuré pour calculer une seconde valeur d'état prédite sur la base de la première valeur d'état prédite acquise, de la matrice de conception, d'une valeur d'observation et de la matrice de gain ; et pour calculer une matrice de variance pour la seconde valeur d'état prédite sur la base de la matrice de variance acquise pour la première valeur d'état prédite, de la matrice de gain et de la matrice de conception ;

**caractérisé en ce que** :

le second module de calcul est configuré pour acquérir une vitesse lissée ; pour calculer une valeur d'état de moment suivant et une matrice de variance pour la valeur d'état de moment suivant sur la base de la vitesse lissée acquise, de la seconde valeur d'état prédite et de la matrice de variance pour la seconde valeur d'état prédite ; dans lequel le second module de calcul est configuré pour :

acquérir une vitesse à un moment courant et des vitesses à deux moments avant le moment courant ;
attribuer une valeur de poids à chaque vitesse acquise, dans lequel une somme des valeurs de poids attribuées est égale à 1 ;
calculer la vitesse lissée sur la base de chaque vitesse acquise et de chaque valeur de poids attribuée ;
dans lequel la vitesse lissée est calculée par :

$$\hat{v}_{ks} = a\hat{v}_k + b\hat{v}_{k-1} + c\hat{v}_{k-2}$$

$$P\hat{v}_{ks} = a^2 P\hat{v}_k + b^2 P\hat{v}_{k-1} + c^2 P\hat{v}_{k-2}$$

où $\hat{v}_{ks}$ est la vitesse lissée, $\hat{v}_k$ est la vitesse d'un récepteur au moment k, $\hat{v}_{k-1}$ est la vitesse du récepteur au moment (k-1), $\hat{v}_{k-2}$ est la vitesse du récepteur au moment (k-2), a, b et c sont les poids attribués aux vitesses de l'époque courante et de deux époques avant l'époque courante ; dans lequel l'accélération est considérée lors du calcul de la vitesse lissée, laquelle est calculée par l'intermédiaire d'une variation de vitesse de deux époques continues ; lorsqu'une variation de vitesse est à l'intérieur de la plage d'une accélération gravitationnelle, a = 1, b = c = 0 sont définis ; lorsque la variation de vitesse est au-delà de la plage de l'accélération gravitationnelle, a = 0, b = c = 0,5 sont définis ; dans lequel la valeur d'état de moment suivant et sa matrice de variance sont calculées par :

$$\hat{x}^*_{k+1} = \hat{x}_k + \hat{v}_{ks}\, t$$

$$P^*_{k+1} = \Phi P_k \Phi^T + P\hat{v}_{ks}\, t^2 + Q$$

où $\hat{v}_{ks}$ est la vitesse lissée du récepteur acquise au moment k, t est un intervalle temporel depuis le moment k jusqu'au moment (k+1), $\Phi$ est la matrice de transition d'état, $P\hat{v}_{ks}$ est une matrice de variance pour la vitesse lissée du récepteur acquise au moment k, $\hat{x}_k$ est la seconde valeur d'état prédite du récepteur au moment k, Q est la matrice de variance d'erreur dynamique et $P_k$ est la matrice de variance pour la seconde valeur d'état prédite du récepteur au moment k.

7. Support de stockage lisible par ordinateur, stockant des instructions exécutables par ordinateur qui, lorsqu'elles sont exécutées, mettent en oeuvre le procédé selon l'une quelconque des revendications 1 à 5.

A dynamic model of Kalman filtering is created on basis of dynamic error variance matrix and a state transition matrix, and an observation model of Kalman filtering is created on basis of an observation error variance matrix and a design matrix    101

A first predicated status value and a variance matrix for the first predicated status value are acquired on basis of the created dynamic model and the observation model of Kalman filtering    102

A gain matrix is calculated on basis of the acquired variance matrix for the first predicted status value, the design matrix and the observation error variance matrix    103

A second predicated status value is calculated on basis of the acquired first predicated status value and the design matrix, the observation value and the gain matrix; a variance matrix for the second predicated status value is calculated on basis of the acquired variance matrix for the first predicated status value, the gain matrix and the design matrix    104

A smoothed velocity is acquired; a next-moment status value and its variance matrix are calculated on basis of the acquired smoothed velocity, the second predicated status value and the variance matrix for the second predicated status value    105

FIG. 1

```
┌─────────────────────┐
│  Modelling module   │
│         21          │
└─────────────────────┘
          │
          │  Dynamic model,
          │  observation model
          ▼
┌─────────────────────┐
│  First acquisition  │
│     module 22       │
└─────────────────────┘
          │
          │  First predicted status value and
          │    variance matrix for the first
          │      predicated status value
          ▼
┌─────────────────────┐
│  First calculation  │
│     module 23       │
└─────────────────────┘
          │
          │  Gain matrix
          ▼
┌─────────────────────┐
│ Second acquisition  │
│     module 24       │
└─────────────────────┘
          │
          │  Second predicted status value
          │  and variance matrix for the second
          │      predicted status value
          ▼
┌─────────────────────┐
│ Second calculation  │
│     module 25       │
└─────────────────────┘
```

Observation value,
first predicted status
value and variance
matrix for the first
predicated status value

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005221374 A
- DE 102008026746 A1